Europäisches Patentamt

European Patent Office

Office européen des brevets

(11) Veröffentlichungsnummer : **0 069 239**
**B1**

(12) # EUROPÄISCHE PATENTSCHRIFT

(45) Veröffentlichungstag der Patentschrift :
07.08.85

(21) Anmeldenummer : 82105049.9

(22) Anmeldetag : 09.06.82

(51) Int. Cl.⁴ : **B 65 G 49/00**

(54) Antriebseinrichtung für die Fortbewegung von langgestrecktem Halbzeug.

(30) Priorität : 08.07.81 DE 3126899

(43) Veröffentlichungstag der Anmeldung :
12.01.83 Patentblatt 83/02

(45) Bekanntmachung des Hinweises auf die Patenterteilung : 07.08.85 Patentblatt 85/32

(84) Benannte Vertragsstaaten :
FR GB IT

(56) Entgegenhaltungen :
DE-A- 2 645 274
DE-B- 1 773 532
DE-B- 2 021 278
US-A- 3 121 325
US-A- 3 327 523

(73) Patentinhaber : **Institut Dr. Friedrich Förster Prüfgerätebau GmbH & Co. KG
Postfach 925 In Laisen 70
D-7410 Reutlingen 1 (DE)**

(72) Erfinder : **Häberlein, Peter
Oferdinger Strasse 23
D-7410 Reutlingen 24 (DE)**

## Beschreibung

Die Erfindung betrifft eine Antriebseinrichtung gemäß dem Oberbegriff des Patentanspruches 1. Derartige Antriebseinrichtungen werden u. a. häufig dazu benutzt, von einem Rollgang herangeführtes Prüfgut durch eine Prüfeinrichtung der zerstörungsfreien Werstoffprüfung zu treiben. Zur Erhaltung der ungestörten Funktionsfähigkeit der Prüfeinrichtung und zur Vermeidung von Beschädigungen derselben erweist es sich dabei in vielen Fällen als notwendig, der Prüfeinrichtung eine Führungseinrichtung vorzuschalten, die für eine exakte Führung des Prüfgutes durch die genaue Mitte der Prüfeinrichtung sorgt.

Die bekannten Antriebseinrichtungen bestehen im allgemeinen aus einer angetriebenen V-Rolle, auf der das Prüfgut ruht, und aus einer von oben wirkenden Andruckrolle. Da das Prüfgut vor und hinter der V-Rolle durch den das Prüfgut heranführenden Rollgang bzw. durch der Prüfeinrichtung vorgeschaltete Führungseinrichtungen unterstützt ist, muß die Andruckrolle mit starkem Druck am Prüfgut anliegen, damit die für den Antrieb nötige Berührung mit der treibenden V-Rolle auch bei gekrümmtem oder im Durchmesser schwankendem Prüfgut erhalten bleibt. Die hierbei auftretenden starken Kräfte können bei schwächerem Prüfgut, insbesondere bei dünnwandigem Rohr zu unerwünschten bleibenden Verformungen führen. Außerdem wird durch den starken Andruck die zentrische Führung im Prüfbereich beeinträchtigt.

Um hier Abhilfe zu schaffen, ist bereits versucht worden, u. a. gemäß DE-OS 1773532, eine « schwimmende » Aufhängung der Prüfeinrichtung vorzusehen, d. h. die Prüfeinrichtung kräftefrei vom Prüfgut führen zu lassen.

Die dabei erreichten, nicht voll befriedigenden Lösungen lassen es jedoch sinnvoller erscheinen, statt dessen eine « schwimmende » Antriebsvorrichtung anzustreben.

Die Erfindung macht sich demgemäß zur Aufgabe, für den zuvor beschriebenen Anwendungsfall wie auch für beliebige andere Anwendungen, eine Antriebseinrichtung der eingangs definierten Art zu schaffen, bei der während der Übermittlung der Antriebsbewegung keine oder nur geringe Kräfte quer zur Längsrichtung auf das Transportgut ausgeübt werden. Diese Aufgabe wird gelöst durch eine Einrichtung, die gemäß Patentanspruch 1 gekennzeichnet ist.

Die erfindungsgemäße Lösung führt zu einer einfachen und raumsparenden Konstruktion, bei der Durchmesserschwankungen oder Krümmungen des Transportgutes entsprechende Kippbewegungen der die Antriebsrollen tragenden Schwingen auslösen. Die auf das Transportgut ausgeübte Andruckkraft kann dabei exakt konstant gehalten werden und so bemessen sein, daß die für den Längsantrieb nötige Friktion mit ausreichender Sicherheit zustande kommt. Nach einer vorteilhaften Ausgestaltung der Erfindung können die verbleibenden geringfügigen Gewichtskräfte durch Federkraft oder ein Gegengewicht exakt auf Null gebracht werden. Nach einer anderen Ausgestaltung empfangen die auf den Drehachsen der Schwingen laufenden beiden Antriebsräder ihre gegenläufige Bewegung von der Vorder- bzw. Rückseite einer Antriebskette. Statt der Kette, die zu einer besonders flachbauenden Konstruktion führt, kann natürlich auch ein einfaches Zahnrad zum Herstellen der gegenläufigen Bewegung der beiden genannten Antriebsräder benutzt werden. Eine andere Ausgestaltung der Erfindung betrifft Anschläge, insbesondere verstellbare Anschläge, mit deren Hilfe der verfügbare Schwenkbereich der beiden Schwingen für beliebige Transportdimensionen auf einen vorgegebenen Wert eingegrenzt werden kann. Nach einer weiteren Ausgestaltung dient zur Herstellung der notwendigen gegenseitigen Andruckkraft der beiden Antriebsrollen wie auch zum Öffnen und Schließen der beiden Schwingen ein Pneumatikzylinder, der an von der Drehachse jeweils gleich weit entfernten Punkten der beiden Schwingen angreifen kann.

Im folgenden wird die Erfindung anhand von einem Ausführungsbeispiel und mittels einiger Figuren näher erläutert.

Es zeigen im einzelnen :

Figur 1  eine Prüfstrecke mit zwei erfindungsgemäßen Antriebseinrichtungen in Vorderansicht

Figur 2  eine Antriebseinrichtung nach Figur 1 in Seitenansicht

Figur 3  eine vergrößerte Vorderansicht der geöffneten Antriebseinrichtung

Figur 4  eine vergrößerte Seitenansicht der geöffneten Antriebseinrichtung

Figur 5  eine Schwinge der Antriebseinrichtung.

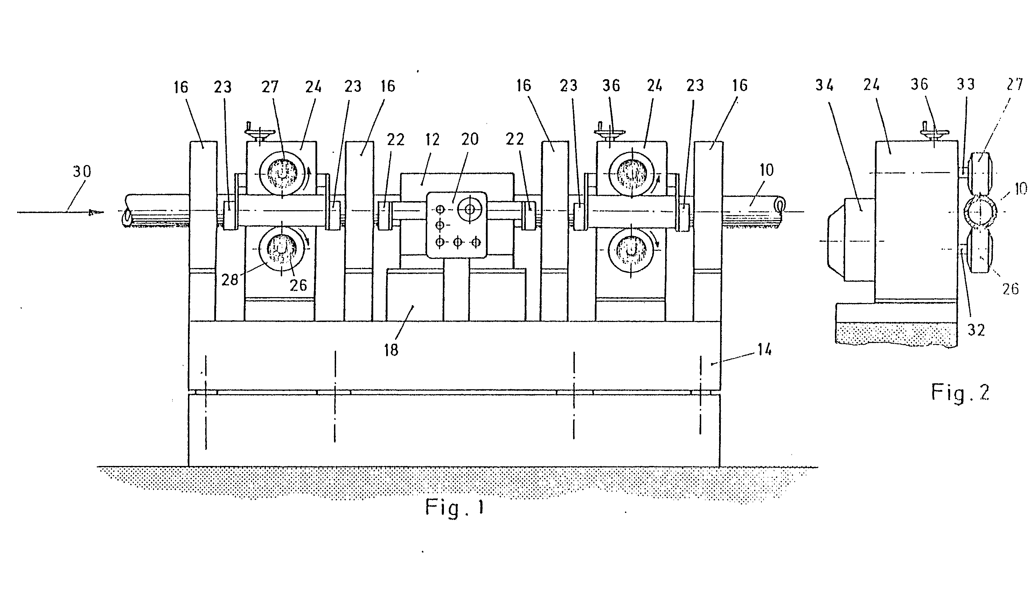

Die in Figur 1 abgebildete Prüfstrecke dient dazu, das Prüfgut, ein Rohr 10 beispielsweise, zentrisch durch eine Prüfeinrichtung, im vorliegenden Falle eine Wirbelstromprüfspulenanordnung 12 zu transportieren. Alle wesentlichen Teile der Prüfstrecke werden von einem Hubtisch 14 getragen, dessen Aufgabe darin besteht, die Höhe der Prüfstrecke an die Höhe des Prüfgutes anzupassen, das von nicht dargestellten Rollgängen heran- bzw. weggeführt wird. Vier Führungseinrichtungen 16 sorgen für die exakte zentrische Führung des Rohres 10 durch die Prüfeinrichtung 12, die auf einem Ausfahrtisch 18 aufgebaut ist und mit diesem zu Wartungszwecken nach vorne ausgefahren werden kann. Bedienelemente zum Steuern der Prüfstrecke sind auf einem Tableau 20 angeordnet. Lichtschranken 22 und 23 liefern Signale, die die Anbzw. Abwesenheit eines Rohres 10 melden. Zwischen jeweils zwei Führungseinrichtungen 16 befinden sich zwei gleich aufgebaute Antriebseinrichtungen 24, die das Rohr 10 in die Prüfeinrichtung 12 hinein bzw. aus ihr heraustreiben und von denen eine in Figur 2 nochmals in Seitenansicht dargestellt ist. Zwei in Pfeilrichtung angetriebene Rollen 26, 27 mit friktionsfördernden Auflagen 28 liegen an der Ober- bzw. Unterseite des Rohre 10 an und bewegen es in Richtung des Pfeiles 30 voran. Die Wellen 32, 33 der Rollen 26, 27 sind in Schwingen gelagert, die weiter unten näher beschrieben werden und die bewirken, daß die beiden Rollen 26 unabhängig voneinander jeder Bewegung ihres Auflagepunktes am Rohr 10 folgen können, gleichgültig ob eine solche Bewegung von einer Krümmung, Durchmesseränderung oder Unrundheit des Rohres hervorgerufen wurde.

Die Antriebsbewegung wird den beiden Wellen 32, 33 von einem flachen Motor 34 mitgeteilt, der rückseitig an das Gehäuse der Antriebseinrichtung 24 angeflanscht ist. Durch Handrad 36 können verstellbare Anschläge an jeden möglichen Durchmesser des Rohres 10 angepaßt werden.

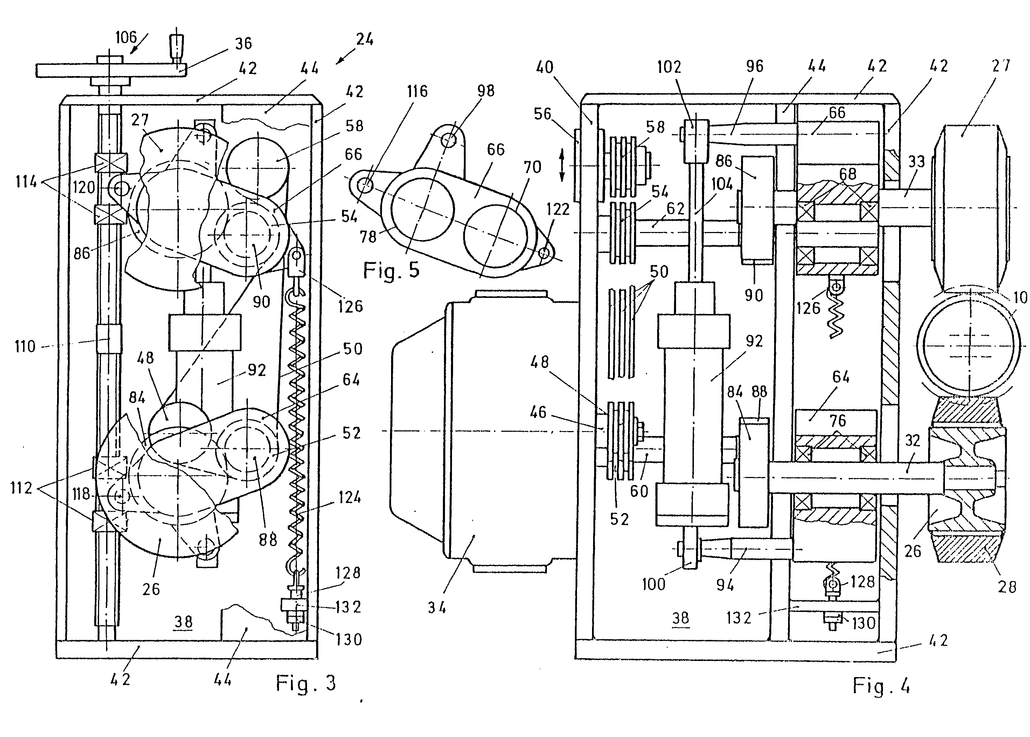

In den Figuren 3 und 4 ist die Antriebseinrichtung 24 noch einmal in vergrößertem Maßstab und bei geöffneter Gehäusewand dargestellt und zwar in Figur 3 in Vorderansicht, in Figur 4 in Seitenansicht.

Das Gehäuse 38, dessen Rückwand 40 den Antriebsmotor 34 trägt, ist aus Platten 42 zusammengeschweißt und besitzt eine zusätzliche Zwischenwand 44, die nur einen Teil der Breite des Gehäuses 38 einnimmt, wie in Figur 3 zu erkennen. Motor 34 besitzt eine Antriebswelle 46, an der ein Kettenrad 48 angebracht ist. Eine vom Kettenrad 48 angetriebene Dreifachkette 50, deren Lauf am besten in Figur 3 verfolgt werden kann, treibt mit ihrer Vorderseite ein Kettenrad 52 und mit ihrer Rückseite ein Kettenrad 54.

Zum Herstellen der nötigen Spannung der Kette 50 ist eine Spannvorrichtung 56 mit einem Spannrad 58 vorgesehen. Die beiden von Kette 50 gegenläufig angetriebenen Kettenräder 52 und 54 sitzen auf Wellen 60 bzw. 62, die in Rückwand 40 und Zwischenwand 44 gelagert sind. An den vorderen Enden der Wellen 60 und 62 sind jeweils Schwingen 64 bzw. 66 gelagert, von denen die zuletzt genannte gesondert in Figur 5 herausgezeichnet ist. Die beiden Schwingen 64, 66 sind gleich aufgebaut, jedoch spiegelbildlich zueinander montiert. Wie am besten an Schwinge 64 zu erkennen, wird die Verbindung zwischen Welle 62 und Schwinge 66 durch zwei Kugellager 68 hergestellt, die in die Bohrung 70 der Schwingen 66 eingesetzt sind. Die Schwingen 64, 66 nehmen ferner die beiden Wellen 32 und 33 auf, die durch Kugellager 76 in den Bohrungen 78 gelagert sind. Die vorderen und rückwärtigen Enden der Wellen 32 und 33 tragen die Treibrollen 26 und 27 bzw. Zahnräder 84 und 86. Die beiden letzteren stehen unabhängig von der Schwenklage der Schwingen 64, 66 ständig im Eingriff mit zwei auf den Wellen 60 bzw. 62 sitzenden Zahnrädern 88 bzw. 90. Auf diese Weise ist die Verbindung zwischen den ortsfesten Wellen 60, 62 und den mit den Schwingen 64, 66 beweglichen Wellen 32, 33 und damit die Antriebsverbindung zwischen dem Motor 34 und den Treibrollen 26, 27 hergestellt.

Ein Pneumatikzylinder 92 dient zum Auseinander- und Zusammenfahren der beiden Treibrollen 26, 27 sowie zum Herstellen des gleichbleibenden Andruckes des Treibrollen gegen das zu bewegende Rohr 10. Zu diesem Zweck sind zwei Bolzen 94, 96 in Bohrungen 98 der beiden Schwingen 64, 66 befestigt. Das vordere Ende des Bolzens 94 ist mit der rückwärtigen Befestigungsöse 100 des Pneumatikzylinders 92, das vordere Ende des Bolzens 96 mit dem Kopf 102 am Schaft 104 des Pneumatikzylinders verbunden. Der Einfachheit halber sind die Druckluftanschlüsse des Pneumatikzylinders 92 nicht eingezeichnet. Durch Einleiten von Druckluft in den unteren Raum des Pneumatikzylinders 92 wird der Schaft 104 nach außen gedrückt. Die Bolzen 94, 96 geben die Bewegung des Pneumatikzylinders 92 weiter, sodaß die Schwingen 64, 66 und mit ihnen die Rollen 26, 27 in ihre äußerste Stellung schwenken. Damit ist die Antriebseinrichtung zum Einführen eines neuen Transportgutes 10 zwischen die beiden Treibrollen 26, 27 geöffnet. Das Anlegen der Treibrollen 26, 27 an das Transportgut 10 geschieht in entsprechender Weise durch Einleiten von Druckluft in den oberen Raum des Pneumatikzylinders 92. Die Andruckkraft kann durch Einstellen des Luftdrucks an die jeweiligen Anforderungen angepaßt werden und ist, da nur vom Luftdruck abhängig, sehr leicht konstant zu halten.

Um nicht bei jedem Öffnen und Anlegen der Treibrollen 26, 27 den vollen Schwenkbereich der Schwingen 64, 66 durchlaufen zu müssen, ist eine verstellbare Anschlaganordnung 106 vorgesehen, die für jeden möglichen Durchmesser eines Transportgutes 10 einen festen Schwenkbereich eingrenzt. Die Anschlaganordnung besteht aus einem Handrad 36 zum Einstellen der Transportgutdimension, einer mit dem Handrad 36 verbundenen Spindel 110 und je zwei Anschlagklötzchen 112 und 114. Die Anschlagklötzchen 112, 114, die durch eine nicht dargestellte Führung am Verdrehen gehindert sind, laufen in auf die Spindel 110 aufgebrachten gegenläufigen Gewinden, also beispielsweise Klötzchen 112 in Linksgewinde und Klötzchen 114 in Rechtsgewinde. Dadurch bewegen sich bei Betätigung des Handrades 36 in einer bestimmten Richtung die Klötzchen 112 mit gleichbleibendem gegenseitigem Abstand nach unten, während die Klötzchen 114 in gleicher Weise nach oben wandern. Ein kräftiger, in den Bohrungen 116 der beiden Schwingen 64, 66 befestigter Stift 118 bzw. 120 schlägt an die Klötzchen 112 bzw. 114 an und begrenzt den Schwenkbereich der Schwingen 64, 66 auf das gewünschte Maß.

Durch auf einer Seite der beiden Schwingen angreifende Gewichtkräfte würde bei der bisher beschriebenen Einrichtung am oberen Auflagepunkt des Rohres 10 eine wenn auch geringe zusätzliche Kraft einwirken. Dies kann vermieden werden durch eine auf der entgegengesetzten Seite, etwa an der Bohrung 122 der Schwinge 66 angreifende Kraft, die z. B. durch ein Gegengewicht realisiert sein könnte. Im vorliegenden Falle wird die Kraft durch eine Schraubenfeder 124 aufgebracht, die durch einen Gabelknopf 126 mit der Bohrung 122 und durch einen Spannknopf 128 und Muttern 130 mit einem Steg 132 verbunden ist.

**Patentansprüche**

1. Antriebseinrichtung für die Fortbewegung von langgestrecktem Halbzeug (10), wie Stangen-, Profil-, Rohrmaterial oder dgl. in dessen Längsrichtung, mit zwei Rollen (26, 27), deren Achsen parallel zueinander und senkrecht zur Längsachse des Halbzeuges ausgerichtet sind, die mit ihren Außenflächen an sich gegenüberliegenden Stellen des Umfanges des Halbzeuges anliegen können, von denen mindestens eine angetrieben ist und mindestens eine eine Andruckskraft in Richtung auf die andere ausüben kann, dadurch gekennzeichnet, daß beide Rollen (26, 27) angetrieben und beide jeweils auf Schwingen (64, 66) gelagert sind, deren Drehachsen (60, 62) parallel zu den Achsen (32, 33) der Rollen (26, 27) verlaufen und die durch ein Zug- und Druckelement (92), vorzugsweise einen Pneumatikzylinder, miteinander kraftschlüssig verbunden sind und daß die Antriebsbewegung für die Rollen (26, 27) durch Räder (88, 90) übertragen wird, deren Achsen mit den Drehachsen (60, 62) der Schwingen (64, 66) zusammenfallen.

2. Antriebseinrichtung nach Anspruch 1, dadurch gekennzeichnet, daß zum Ausgleich der Gewichtskräfte, die auf einer Seite der beiden Schwingen (64, 66) angreifen, auf der an anderer Seite eine Gegenkraft in Form z. B. eines Gegengewichtes oder einer Federkraft (124) angreift.

3. Antriebseinrichtung nach Anspruch 1, dadurch gekennzeichnet, daß die beiden Räder (88, 90), die die Antriebsbewegung für die auf den Schwingen (64, 66) gelagerten Rollen (26, 22) übertragen über je eine Welle (60, 62) und ein Kettenrad (52, 54) von der Vorder- bzw. Rückseite einer Treibkette (50) gegenläufig angetrieben werden.

4. Antriebseinrichtung nach Anspruch 1, dadurch gekennzeichnet, daß die beiden Räder (88, 90) anstelle der Treibkette (50) von einem Zahnrad gegenläufig angetrieben werden.

5. Antriebseinrichtung nach Anspruch 1, dadurch gekennzeichnet, daß die Räder (88, 90) Zahnräder sind und ihre Antriebsbewegung über weitere, mit den vorgenannten Rädern (88, 90) im Eingriff stehende Zahnräder (84, 86) an die Rollen (26, 27) weitergeben.

6. Antriebseinrichtung nach Anspruch 1, dadurch gekennzeichnet, daß die Schwenkbewegung der Schwingen (64, 66) durch Anschläge (112, 114) begrenzt ist.

7. Antriebseinrichtung nach Anspruch 1, dadurch gekennzeichnet, daß die Anschläge (112, 114) durch eine Spindel (110) mit gegenläufigen Gewinden verstellt werden können.

8. Antriebseinrichtung nach Anspruch 1, dadurch gekennzeichnet, daß die Kraft des Zug- und Druckelementes (92) dosierbar ist.

9. Antriebseinrichtung nach Anspruch 1, dadurch gekennzeichnet, daß die Punkte, an denen das Zug- und Druckelement (92) an den beiden Schwingen (64, 66) angreift, von der Drehachse (60, 62) der Schwingen (64, 66) jeweils gleichweit entfernt sind.

**Claims**

1. Drive apparatus for moving elongate semifinished material (10) such as bar, profile, tubular material or the like, in the longitudinal direction thereof, comprising two rollers (26, 27) whose axes are disposed in parallel relationship to each other and normal to the longitudinal axis of the semifinished material and which with their outside surfaces can bear against mutually oppositely disposed locations on the periphery of the semifinished material, of which at least one is driven and at least one can apply a pressure force towards the other, characterised in that both rollers (26, 27) are driven and both rollers are respectively mounted on rocking arms (64, 66) whose axes of rotation (60, 62) extend parallel to the axes (32, 33) of the rollers (26, 27) and which are force-lockingly connected together by a pulling and pushing element (92), preferably a pneumatic cylinder, and that the drive movement for the rollers (26, 27) is transmitted by wheels (88, 89) whose axes coincide with the axes (60, 62) of rotation of the rocking arms (64, 66).

2. A drive apparatus according to claim 1, characterised in that to balance the forces caused by weight which act on one side of the two rocking arms (64, 66), there acts on the other side thereof a counter-acting force in the form for example of a counterweight or a spring force (124).

3. A drive apparatus according to claim 1, characterised in that the two wheels (88, 90) which transmit the drive movement for the rollers (26, 27) which are mounted on the rocking arms (64, 66) are driven in opposite directions respectively by the front and the rear of a drive chain (50), by way of a respective shaft (60, 62) and a respective chain wheel (52, 54).

4. A drive apparatus according to claim 1, characterised in that the two wheels (88, 90) are driven in opposite directions by a gear instead of the drive chain (50).

5. A drive apparatus according to claim 1, characterised in that the wheels (88, 90) are gear wheels and transmit their drive movement to the rollers (26, 27) by way of further gears (84, 86) which are in engagement with said wheels (88, 90).

6. A drive apparatus according to claim 1, characterised in that the pivotal movement of the rocking arms (64, 66) is restricted by abutments (112, 114).

7. A drive apparatus according to claim 1, characterised in that the abutments (112, 114) can be adjusted by a spindle (110) having screwthreads of opposite hands.

8. A drive apparatus according to claim 1, characterised in that the force of the force of the pulling and pushing element (92) is meterable.

9. A drive apparatus according to claim 1, characterised in that the points at which the pulling and pushing element (92) engages the two rocking arms (64, 66) are equally spaced from the respective pivot axes (60, 62) of the rocking arms (64, 66).

**Revendications**

1. Dispositif d'entraînement pour le déplacement de demi-produits oblongs (10), tels que barres, profilés, tubes ou analogues, dans le sens de leur longueur, comprenant deux rouleaux (26, 27) dont les axes sont parallèles l'un à l'autre et perpendiculaires à l'axe longitudinal du demi-produit et qui peuvent s'appliquer, par leurs surfaces extérieures, contre des parties du contour du demi-produit situées l'une en face de l'autre, l'un d'eux au moins étant entraîné et l'un d'eux au moins pouvant exercer une force de poussée dans la direction de l'autre, caractérisé en ce que les deux rouleaux (26, 27) sont entraînés et que tous deux sont montés à rotation sur des bielles oscillantes (64, 66) dont les axes de rotation (60, 62) sont parallèles aux axes (32, 33) des rouleaux (26, 27) et qui sont reliées l'une à l'autre, de manière à se transmettre des efforts, par un élément de traction et de compression (92), de préférence un vérin pneumatique, et en ce que le mouvement assurant l'entraînement des rouleaux (26, 27) est transmis par des roues (88, 90) dont les axes coïncident avec les axes de rotation (60, 62) des bielles oscillantes (64, 66).

2. Dispositif d'entraînement selon la revendication 1, caractérisé en ce que, pour assurer la compensation des forces dues au poids qui agissent sur l'un des côtés des deux bielles oscillantes (64, 66), une force opposée, produite par exemple par un contrepoids ou un ressort (124), agit de l'autre côté.

3. Dispositif d'entraînement selon la revendication 1, caractérisé en ce que les deux roues (88, 90) qui transmettent le mouvement d'entraînement aux rouleaux (26, 22) montés à rotation sur les bielles oscillantes (64, 66) sont entraînées en sens inverse chacune par l'intermédiaire d'un arbre (60, 62) et d'une roue à chaîne (52, 54) de la partie avant ou arrière d'une chaîne d'entraînement (50).

4. Dispositif d'entraînement selon la revendication 1, caractérisé en ce que les deux roues (88, 90), au lieu d'être entraînées en sens inverse par une chaîne (50), le sont par une roue dentée.

5. Dispositif d'entraînement selon la revendication 1, caractérisé en ce que les roues (88, 90) sont des roues dentées et transmettent leur mouvement d'entraînement aux rouleaux (26, 27) par l'intermédiaire d'autres roues dentées (84, 86) qui sont en prise avec les roues (88, 90) déjà mentionnées.

6. Dispositif d'entraînement selon la revendication 1, caractérisé en ce que le mouvement de pivotement des bielles oscillantes (64, 66) est limité par des butées (112, 114).

7. Dispositif d'entraînement selon la revendication 1, caractérisé en ce que les butées (112, 114) peuvent être déplacées au moyen d'une broche (110) comportant des filetages opposés.

8. Dispositif d'entraînement selon la revendication 1, caractérisé en ce que la force de l'élément de traction et de compression (92) peut être réglée.

9. Dispositif d'entraînement selon la revendication 1, caractérisé en ce que les points où l'élément de traction et de compression (92) agit sur les deux bielles oscillantes (64, 66) sont également éloignés de l'axe de rotation (60, 62) des bielles oscillantes (64, 66).

Fig. 1

Fig. 2

0 069 239

Fig. 5

Fig. 3

Fig. 4

0 069 239